(19) **Europäisches Patentamt European Patent Office Office européen des brevets**

(11) **EP 3 900 199 B1**

(12) **FASCICULE DE BREVET EUROPEEN**

(45) Date de publication et mention
de la délivrance du brevet:
**19.11.2025 Bulletin 2025/47**

(21) Numéro de dépôt: **19818164.6**

(22) Date de dépôt: **17.12.2019**

(51) Classification Internationale des Brevets (IPC):
*H04B 5/45* ⁽²⁰²⁴·⁰¹⁾    *H04B 7/10* ⁽²⁰¹⁷·⁰¹⁾
*H04B 14/00* ⁽²⁰⁰⁶·⁰¹⁾    *G06K 19/07* ⁽²⁰⁰⁶·⁰¹⁾

(52) Classification Coopérative des Brevets (CPC):
**H04B 14/008; G06K 19/0723; H04B 5/45;
H04B 7/10**

(86) Numéro de dépôt international:
**PCT/EP2019/085773**

(87) Numéro de publication internationale:
**WO 2020/127363 (25.06.2020 Gazette 2020/26)**

(54) **SYSTÈME DE COMMUNICATION PAR RÉTRODIFFUSION AMBIANTE, APPAREIL ET PROCÉDÉ ASSOCIÉS**

UMGEBUNGSRÜCKSTREUUNGSKOMMUNIKATIONSSYSTEM, ZUGEHÖRIGE VORRICHTUNG UND VERFAHREN

AMBIENT BACKSCATTERING COMMUNICATION SYSTEM, ASSOCIATED APPARATUS AND METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2018 FR 1873139**

(43) Date de publication de la demande:
**27.10.2021 Bulletin 2021/43**

(73) Titulaires:
• **Centre national de la recherche scientifique
  75016 Paris (FR)**
• **Ecole Supérieure de Physique et de Chimie
  Industrielles de la Ville de Paris
  75005 Paris (FR)**
• **ORANGE SA
  75015 Paris (FR)**

(72) Inventeurs:
• **DE ROSNY, Julien
  94130 NOGENT SUR MARNE (FR)**
• **PHAN-HUY, Dinh-Thuy
  92320 CHATILLON (FR)**
• **SELMENE, Nissem
  92320 CHATILLON (FR)**

(74) Mandataire: **IPAZ
Bâtiment Platon
Parc Les Algorithmes
91190 Saint-Aubin (FR)**

(56) Documents cités:
**US-A1- 2015 108 210**

• **VAN HUYNH NGUYEN ET AL: "Ambient
Backscatter Communications: A Contemporary
Survey", IEEE COMMUNICATIONS SURVEYS &
TUTORIALS, vol. 20, no. 4, 19 November 2018
(2018-11-19), pages 2889 - 2922, XP011698260,
DOI: 10.1109/COMST.2018.2841964**

**Description**

La présente invention concerne un système de communication par rétrodiffusion ambiante. L'invention se rapporte aussi à un appareil comportant le système précité. L'invention concerne également un procédé d'optimisation de la communication par rétrodiffusion ambiante dans le système de communication, ainsi qu'un produit programme d'ordinateur et un support lisible d'informations associés.

La technique de rétrodiffusion ambiante est une technique de communication permettant à un émetteur d'envoyer un message à un récepteur sans émettre aucune onde radio supplémentaire par rapport aux ondes qui sont déjà présentes.

Un exemple de telle technique est notamment décrit dans un article de Van Huynh et al. intitulé « Ambient Backscatter Communications : A Contemporary Survey » tiré de IEEE COMMUNICATIONS SURVEYS & TUTORIALS, volume 20, numéro 4 en date du 19 novembre 2018.

L'émetteur modifie les ondes radio ambiantes issues de sources ambiantes, et le récepteur détecte ces modifications. La détection par le récepteur du signal provenant de l'émetteur est perturbée par la présence d'interférences entre le signal de l'émetteur et le signal provenant directement de la source. Il est donc souhaitable d'améliorer la qualité de la réception du signal provenant de l'émetteur.

Pour cela, il est connu d'utiliser un module de traitement de signal au niveau du récepteur servant à supprimer l'interférence gênante entre les deux signaux. Par exemple, un tel module de traitement estime la contribution au canal de propagation entre la source et le récepteur due au seul trajet direct, par exemple en cherchant un maximum de corrélation entre un signal de référence reçu et un signal de référence émis par la source. Le module de traitement applique ensuite sur un signal de données reçu une égalisation du canal reposant uniquement sur le canal du trajet direct. A l'aide d'une modulation - démodulation, il est alors possible de retrancher dans le signal final la partie la plus importante de l'interférence.

Toutefois, un tel module de traitement implique une ressource supplémentaire qui effectue des opérations complexes, ce qui résulte en une consommation accrue d'énergie.

Par ailleurs, il est également connu d'autres procédés de communication impliquant des techniques de rétrodiffusion comme celui décrit dans le document US 2015/0108210.

Il existe donc un besoin pour un système de communication par rétrodiffusion ambiante qui présente une bonne qualité de réception avec une consommation d'énergie moindre.

A cet effet, la description décrit un système de communication par rétrodiffusion ambiante, le système de communication comportant un émetteur de rétrodiffusion ambiante propre à générer un signal de rétrodiffusion ambiante selon une première polarisation à partir d'un signal ambiant incident sur l'émetteur, un récepteur de rétrodiffusion ambiante propre à détecter selon une deuxième polarisation le signal de rétrodiffusion ambiante émis par l'émetteur de rétrodiffusion ambiante, et un dispositif de réduction de l'interférence entre le signal de rétrodiffusion ambiante et un signal ambiant incident sur le récepteur, le dispositif de réduction contrôlant la première polarisation et la deuxième polarisation, au moins l'une desdites première et deuxième polarisations étant réglable.

Selon des modes de réalisation particuliers, le système présente une ou plusieurs des caractéristiques suivantes, prise(s) isolément ou selon toutes les combinaisons techniquement possibles :

- la première polarisation et la deuxième polarisation présentent un premier angle entre elles, le dispositif de réduction contrôlant le premier angle pour que la valeur d'un critère de performance du système de communication soit optimisée, le critère étant choisi dans le groupe constitué du taux d'erreur, du débit, du temps de transmission, du rapport signal à bruit et interférences, et de la qualité de service.
- le dispositif de réduction comprend un premier organe de contrôle de la première polarisation et un deuxième organe de contrôle de la deuxième polarisation.
- l'émetteur est réalisé en un matériau reconfigurable en polarisation, le premier organe de contrôle étant un organe de reconfiguration du matériau.
- le système comporte, en outre, une source propre à générer un signal ambiant selon une troisième polarisation, le dispositif de réduction contrôlant également la troisième polarisation.
- la troisième polarisation et la deuxième polarisation présentent un deuxième angle entre elles, le dispositif de réduction contrôlant le deuxième angle pour que la valeur d'un critère de performance du système de communication soit optimisée, le critère étant choisi dans le groupe constitué du taux d'erreur, du débit, du temps de transmission, du rapport signal à bruit et interférences, et de la qualité de service.

La présente description propose également un appareil comportant un système tel que précédemment décrit.

La présente description décrit aussi un procédé d'optimisation de la communication par rétrodiffusion ambiante dans un système de communication par rétrodiffusion ambiante comportant un émetteur de rétrodiffusion ambiante propre à générer un signal de rétrodiffusion ambiante selon une première polarisation à partir d'un signal ambiant incident sur l'émetteur, un récepteur de rétrodiffusion ambiante propre à détecter selon une deuxième polarisation le signal de rétrodiffusion ambiante émis par l'émetteur de rétrodiffusion ambiante, et un dispositif de réduction de l'interférence entre le signal de rétrodiffusion ambiante et un signal ambiant incident sur le récepteur, le dispositif de réduction contrôlant la première polarisation et la deuxième polarisation, au moins l'une desdites première et deuxième polarisations étant réglable, le procédé comportant au moins une étape de variation de la première polarisation et la deuxième polarisation pour que la valeur d'un critère de performance du système de communication soit optimisée, le critère étant choisi dans le groupe constitué du taux d'erreur, du débit, du temps de transmission, du rapport signal à bruit et interférences, et de la qualité de service.

La présente description propose également un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape du procédé tel que précédemment décrit lorsque le programme d'ordinateur est mis en œuvre sur l'unité de traitement des données.

La présente description propose également un support lisible d'informations sur lequel est mémorisé un produit programme d'ordinateur tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple d'appareil, et
- la figure 2 est une vue schématique d'un système de communication faisant partie de l'appareil.

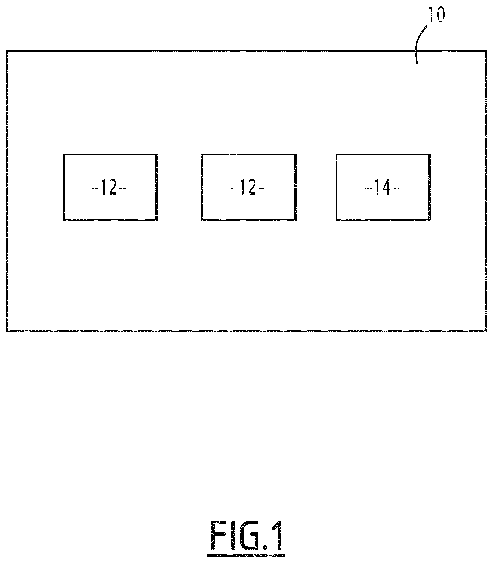

Un appareil 10 est représenté sur la figure 1.

Selon l'exemple représenté, l'appareil 10 est un objet connecté.

Un objet connecté est un objet électronique et partageant des données avec un autre objet via un réseau sans fil.

L'appareil 10 comporte une pluralité d'éléments 12 parmi lesquels un système de communication par rétrodiffusion ambiante 14.

Un système de communication par rétrodiffusion ambiante 14 est un système adapté à mettre en œuvre une technique de rétrodiffusion ambiante, c'est-à-dire à établir une communication entre deux éléments sans émettre aucune onde radio supplémentaire par rapport aux ondes qui sont déjà présentes.

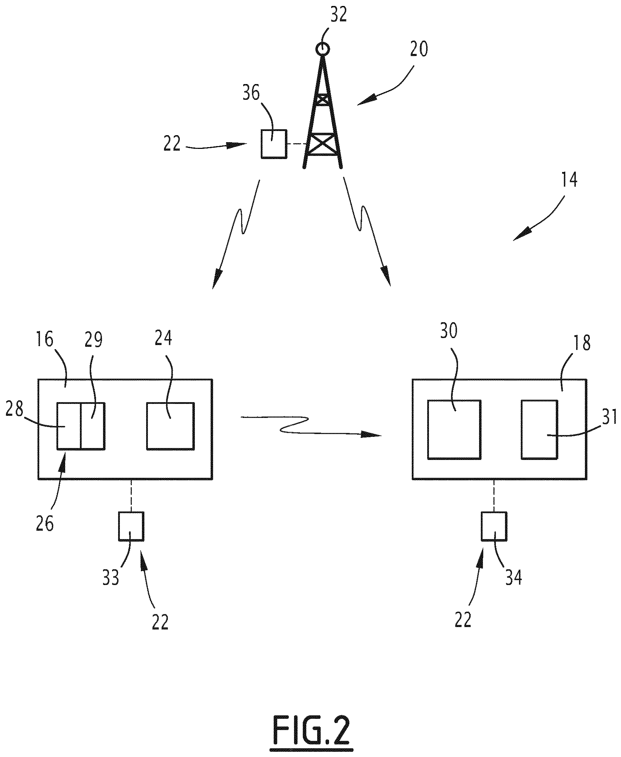

Un exemple de système de communication 14 est illustré plus en détail sur la figure 2.

Le système de communication 14 comporte un émetteur de rétrodiffusion ambiante 16, un récepteur de rétrodiffusion ambiante 18, une source 20 et un dispositif de réduction d'interférences 22.

L'émetteur 16 est propre à générer un signal de rétrodiffusion ambiante à partir d'un signal ambiant selon une première polarisation réglable, dite polarisation émetteur $P_E$.

L'émetteur 16 est reconfigurable selon une première pluralité d'états.

La première pluralité d'états notée $\varepsilon$ regroupe la pluralité des états de l'émetteur 16 avec au moins deux états de polarisation différents. $E$ est, par définition, le cardinal de $\varepsilon$, ce qui s'écrit $E = \text{card}(\varepsilon)$.

Par exemple, $E = 2$ peut être réalisé avec deux dipôles orthogonaux. En effet, un premier état peut être est obtenu en mettant les deux brins du premier dipôle en court-circuit et les deux brins du second dipôle en circuit ouvert, et le deuxième état peut être est obtenu en mettant les deux brins du premier dipôle en circuit ouvert, les deux brins du second dipôle en circuit fermé. L'orientation de la polarisation qui est la mieux rétrodiffusée dans le premier état (celle du dipôle en court-circuit) est orthogonale à l'orientation qui est la mieux rétrodiffusée dans le second état (celle du dipôle en court-circuit).

Selon un autre exemple, il a déjà été montré que des réalisations à $E = 100$ sont possibles, notamment dans un article de M. Dupré et al. intitulé « Wave-Field Shaping in Cavities: Waves Trapped in a Box with Controllable Boundaries » (Physical Review Letters 115 (2015): 017701).

Il est défini un sous-ensemble de $\varepsilon$ appelé modulation $\mathcal{M}$, comprenant au moins deux états de polarisation différents.

$$\text{Soit } M = \text{card}(\mathcal{M}).$$

L'émetteur est ainsi propre à émettre un message composé de symboles en basculant entre les $M$ états d'une modulation $\mathcal{M}$, et en appliquant la correspondance entre symboles et états.

Dans l'exemple proposé, l'émetteur 16 comporte un résonateur 24, dit résonateur de rétrodiffusion 24, et un circuit de commutation 26.

Le résonateur de rétrodiffusion 24 est reconfigurable.

Le résonateur de rétrodiffusion 24 est, par exemple, réalisé en un matériau reconfigurable en polarisation.

Le matériau reconfigurable est, de préférence, choisi pour être capable d'interagir avec des ondes émises par la source 20.

Plusieurs exemples de résonateurs de rétrodiffusion 24 reconfigurables sont envisageables.

Par exemple, le résonateur de rétrodiffusion 24 comporte au moins deux dipôles croisés, pouvant chacun être commuté indépendamment en circuit ouvert ou fermé.

En variante, le résonateur de rétrodiffusion 24 est une antenne élémentaire d'un réseau d'antennes à double ou multiple polarisations.

Selon un autre exemple, le résonateur de rétrodiffusion 24 est réalisé sous forme d'une antenne multiport générant au moins deux polarisations différentes. Les ports sont connectés à un commutateur apte à modifier l'impédance de charge des ports.

Le récepteur 18 est propre à détecter le signal de rétrodiffusion ambiante émis par l'émetteur 16 selon une deuxième polarisation réglable, dite polarisation récepteur $P_R$.

Le récepteur 18 est reconfigurable selon une deuxième pluralité d'états.

La deuxième pluralité d'états notée $\mathcal{R}$ est constitué de $R$ états ($R = \mathrm{card}(\mathcal{R})$).

Les mêmes valeurs que pour l'entier $E$ sont également envisageables pour l'entier $R$.

Dans l'exemple proposé, le récepteur 18 comporte une antenne 30, dite antenne de réception 30, et un circuit de commutation 31.

L'antenne de réception 30 est reconfigurable.

Selon un exemple particulier, l'antenne de réception 30 est une antenne à fente avec une cavité à l'arrière, aussi désignée sous le terme anglais de « *cavity-backed slot antenna* ».

Dans un tel exemple, l'antenne de réception 30 peut présenter quatre polarisations distinctes, à savoir deux circulaires et deux parallèles.

En variante, l'antenne de réception 30 comporte deux sous-antennes dipolaires à polarisation linéaire orthogonale.

Selon encore un autre exemple, l'antenne de réception 30 comporte deux sous-antennes à double polarisation présentant chacune deux ports reliés à un interrupteur radiofréquence respectif.

L'antenne de réception 30 présente des propriétés optimisées pour détecter des ondes à des fréquences choisies, notamment les fréquences des ondes émises par la source 20.

Les remarques précédentes portant sur le circuit de commutation 26 de l'émetteur 16 sont également valables pour le circuit de commutation 31 du récepteur 18 et ne sont pas répétées ici.

La source 20 est une source propre à générer un signal ambiant selon une troisième polarisation, dite polarisation source $P_S$.

En l'espèce, cela signifie que la source 20 est propre à émettre des ondes.

En particulier, la source 20 est propre à émettre des ondes radiofréquences.

A titre d'illustration, la source 20 est un point d'accès d'un réseau sans fil, notamment un réseau wifi ou un émetteur de radio FM.

Dans l'exemple décrit, la source 20 est incluse dans l'appareil 10, et la troisième polarisation est réglable.

Toutefois, dans de nombreux cas, la troisième polarisation est fixe, notamment lorsque la source 20 ne fait pas partie de l'appareil 10. A titre d'exemple particulier d'un tel cas, la source 20 est un émetteur de télévision, notamment une tour de télévision numérique terrestre.

La source 20 est reconfigurable selon une troisième pluralité d'états.

La troisième pluralité d'états notée $\mathcal{S}$ est constituée de $S$ états ($S = \mathrm{card}(\mathcal{S})$).

Les mêmes valeurs que pour l'entier $E$ sont également envisageables pour l'entier $S$.

La source 20 comporte une antenne 32, dite antenne source 32.

Les mêmes remarques que pour l'antenne de réception 30 s'appliquent pour l'antenne source 32 et ne sont pas répétées ici.

En particulier, dans l'exemple proposé, l'antenne source 30 est reconfigurable.

Le dispositif de réduction 22 est un dispositif de réduction de l'interférence entre le signal de rétrodiffusion ambiante et un signal ambiant incident sur le récepteur 18.

Dans l'exemple proposé, le dispositif de réduction 22 contrôle la polarisation émetteur $P_E$, la polarisation récepteur $P_R$ et la polarisation source $P_S$.

Le dispositif de réduction 22 comprend trois organes de contrôle de polarisation 33, 34 et 36.

Chaque organe de contrôle 33, 34 et 36 est propre à faire varier la polarisation de l'élément considéré selon plusieurs valeurs, continues ou non.

Plus spécifiquement, le dispositif de réduction 22 comprend un premier organe de contrôle 33 de la polarisation émetteur $P_E$, un deuxième organe de contrôle 34 de la polarisation récepteur $P_R$ et un troisième organe de contrôle 36 de la polarisation source $P_S$.

Selon l'exemple décrit, le premier organe de contrôle 33 est un organe de reconfiguration du matériau.

Par exemple, le premier organe de contrôle 33 est propre à fournir l'énergie permettant de reconfigurer le matériau dans lequel est formé le résonateur de rétrodiffusion 24.

Dans le cas de la figure 2, les organes de contrôle 33, 34 et 36 sont présentés comme étant distincts, mais certains ou tous peuvent être confondus.

En fonctionnement, le dispositif de réduction 22 contrôle la polarisation de l'émetteur 16, la polarisation du récepteur 18 et la polarisation de la source 20 pour obtenir une configuration favorable. Par configuration favorable, il est entendu une configuration permettant d'améliorer au moins un critère par rapport à une configuration où les polarisations ne sont pas contrôlées.

Autrement formulé, le dispositif de réduction 22 tire profit de l'effet de polarisation pour atténuer la contribution du signal ambiant pour favoriser la détection du signal de rétrodiffusion ambiante.

Une manière de quantifier cet effet est de calculer le contraste induit par l'émetteur 16. Ce contraste peut être défini comme étant la variation d'intensité enregistrée par le récepteur 18 et induit par l'émetteur 16 sur l'intensité moyenne reçue par le récepteur 18. Ainsi, le contraste s'écrit :

$$\eta = 2 \frac{|I_1 - I_0|}{I_1 + I_0}$$

où :

- $\eta$ est le contraste,
- $I_0$ est l'intensité lorsque l'émetteur 16 présente une polarisation non contrôlée (état 0), et
- $I_1$ est l'intensité lorsque l'émetteur 16 présente une polarisation contrôlée par le dispositif de réduction 22 (état 1).

Le contraste dépend des trois polarisations comme cela va être montré dans ce qui suit en utilisant le formalisme des vecteurs de Jones.

La polarisation d'émission $P_E$ est ainsi représentée par un vecteur de polarisation d'émission $V_E$, la polarisation de réception $P_R$ par un vecteur de polarisation de réception $V_R$ et la polarisation de la source $P_S$ par un vecteur de polarisation de source $V_S$.

Par ailleurs, dans la suite la notation (A,B) représente le complexe $A_1 B_1 + A_2 B_2$.

Lorsque l'émetteur 16 est dans l'état 1, le signal reçu SR par le récepteur 18 s'exprime comme :

$$SR = \beta(V_S, V_R)$$

où $\beta$ est un facteur de proportionnalité complexe qui prend en compte les effets de la propagation (phase, atténuation ...).

Lorsque l'émetteur 16 est dans l'état 0, le signal reçu SR par le récepteur 18 s'exprime comme :

$$SR = \beta(V_S, V_R) + \beta\alpha(V_S, V_E)(V_E, V_R)$$

où $\alpha$ est un facteur complexe qui décrit l'effet de la diffusion et la propagation.

En utilisant les deux expressions précédentes, il vient pour le contraste la formule qui suit :

$$\eta = \frac{2|\alpha|^2|(V_S, V_E)|^2|(V_S, V_R)|^2 + 2\Re[\alpha(V_S, V_E)^*(V_S, V_E)(V_E, V_R)]}{2|(V_S, V_R)|^2 + |\alpha|^2|(V_S, V_E)|^2|(V_S, V_R)|^2 + 2\Re[\alpha(V_S, V_E)^*(V_S, V_E)(V_E, V_R)]}$$

En maximisant l'expression suivante pour le cas de trois polarisations linéaires, il vient que l'angle optimal pour la polarisation récepteur $P_R$ est 90° par rapport à la polarisation source $P_S$ et que l'angle optimal pour la polarisation émetteur $P_E$ est la moyenne arithmétique de la polarisation récepteur $P_R$ et de la polarisation source $P_S$.

Le dispositif de réduction 22 contrôle ainsi les trois polarisations $P_R$, $P_S$ et $P_E$ pour respecter les critères précédents de sorte que le contraste défini précédemment soit optimisé.

Il est à noter que le raisonnement précédent reste valable pour des polarisations plus complexes, notamment elliptiques.

En outre, le même raisonnement est aussi transposable pour d'autres critères d'amélioration de la communication du signal rétrodiffusé.

Le but est donc d'optimiser la valeur du critère de performance, cette valeur pouvant être selon les cas maximisée ou minimisée.

Parmi ces critères de performance, il peut être cité le niveau de signal rétrodiffusé détecté par le récepteur 18, le taux d'erreur, le débit, le temps de transmission, le rapport signal à bruit et interférences, et la qualité de service.

A titre d'exemple particulier, il pourrait être envisagé d'utiliser comme critère de maximiser la somme de $I_0$ et de $I_1$ ou d'assurer que la différence entre $I_1$ et $I_0$ soit supérieure au bruit.

Le dispositif de réduction 22 permet d'obtenir un système de communication par rétrodiffusion ambiante 14 qui présente une bonne qualité de réception avec une consommation d'énergie moindre.

En outre, le réglage du système de communication 14 est particulièrement aisé, comme cela va être expliqué en référence à la mise en œuvre d'un procédé d'optimisation de la communication par rétrodiffusion ambiante dans le système de communication 14 pour que le critère de performance soit inférieur ou égal à une valeur seuil.

Selon un premier exemple, dit exemple A, le procédé est mis en œuvre manuellement.

Par exemple, dans le cas de polarisations linéaires, les polarisations de la source $P_S$, du récepteur $P_R$ et de l'émetteur $P_E$ sont variées pour que la polarisation du récepteur $P_R$ et la polarisation de la source $P_S$ soient orthogonales et que la polarisation du récepteur $P_R$ et la polarisation de l'émetteur $P_E$ ne soient pas parallèles.

L'exemple A est particulièrement adapté pour des environnements dépourvus d'obstacles.

Selon un deuxième exemple, dit exemple B, le procédé est mis en œuvre automatiquement en supposant que seuls l'émetteur 16 et le récepteur 18 sont à régler.

Le procédé est ainsi mis en œuvre au moins en partie de manière informatique.

Le procédé peut ainsi comporter l'utilisation d'un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape du procédé lorsque le programme d'ordinateur est mis en œuvre sur l'unité de traitement des données.

Cela implique que le procédé selon l'exemple B vise à déterminer la valeur optimale d'un doublet (m,r) permettant de maximiser un des critères d'amélioration précités. Par définition m est un élément de $\mathcal{M}$ et r est un élément de $\mathcal{R}$.

Le procédé selon l'exemple B comporte une étape de test de chaque doublet (m, r) possible.

Dans une telle étape de test pour un doublet, l'émetteur 16 est configuré pour utiliser m et le récepteur 18 est configuré dans l'état r.

L'émetteur 16 et le récepteur 18 sont maintenus dans une telle configuration pendant un intervalle de temps supérieur ou égal à l'intervalle de temps minimal durant lequel l'émetteur émet l'intégralité d'au moins un message de test.

Un exemple de message de test est un ensemble de messages connus du récepteur et comportant chacun un champ de contrôle de redondance cyclique (aussi désigné sous le sigle CRC) émis à des instants connus précédés d'une séquence de synchronisation connue du récepteur 18.

Le récepteur 18 reçoit le message de test et en utilisant la séquence de synchronisation, le récepteur 18 démodule le message de test. Le récepteur 18 effectue une vérification du champ de contrôle de redondance cyclique et en déduit si le message reçu est bien décodé ou erroné. Lorsque le message est correct, l'indicateur de communication est égal à 1 mais a contrario, avec un message non valide, l'indicateur de communication est égal à 0. En présence de plusieurs champs de contrôle de redondance cyclique, l'indicateur est, par exemple, une moyenne arithmétique de l'ensemble des indicateurs de communications déterminés après vérification de chaque champ de contrôle de redondance cyclique.

Selon un autre exemple, le message de test est un ensemble de messages connus du récepteur et précédés d'une séquence de synchronisation connue du récepteur.

Cet autre exemple est similaire au cas précédent, la détermination de l'indicateur de communication étant obtenu par comparaison du message démodulé avec le message connu et évaluation du taux d'erreur symbole (indicateur compris entre 0 et 1).

La succession des différentes valeurs de m et de r pour pouvoir effectuer chaque étape de test se fait, par exemple, suivant un ordre et un rythme prédéfinis et connus à la fois du récepteur et de l'émetteur.

Le procédé selon l'exemple B comporte enfin une étape de comparaison des indicateurs de chaque doublet (m, r) pour obtenir le doublet présentant le meilleur indicateur.

Le système de communication 14 est ainsi réglé.

L'extension au cas d'une source reconfigurable correspond au cas de l'exemple B dans lequel, au lieu de tester tous les doublets (m, r) possibles, ce sont tous les triplets (m, r, s) qui sont testés avec s un élément de $\mathcal{S}$.

Par exemple, il est possible de fixer la valeur de s, puis de mettre en œuvre le procédé de l'exemple B, puis de changer la valeur de s, et de mettre en œuvre le procédé de l'exemple B, et ainsi de suite.

Il est ainsi obtenu pour chaque nouvelle valeur de s, un doublet (m, r) optimal au sens de l'indicateur de communication. Il devient alors possible de sélectionner la valeur de s optimale par comparaison des indicateurs de communication. L'ensemble du triplet correspond à la valeur de s sélectionnée et au doublet (m, r) optimal associé à cette valeur de s.

Le procédé qui vient d'être décrit montre aussi que le dispositif de réduction 22 est également utilisable lorsque la source 20 n'est pas réglable en polarisation.

Dans tous les cas, le dispositif de réduction 22 permet d'augmenter la performance du système de communication 14 avec une faible consommation d'énergie impliquée.

## Revendications

1. Système de communication par rétrodiffusion ambiante (14), le système de communication (14) comportant :

   - un émetteur (16) de rétrodiffusion ambiante propre à générer un signal de rétrodiffusion ambiante selon une première polarisation à partir d'un signal ambiant incident sur l'émetteur (16),
   - un récepteur (18) de rétrodiffusion ambiante propre à détecter selon une deuxième polarisation le signal de rétrodiffusion ambiante émis par l'émetteur de rétrodiffusion ambiante, et
   - un dispositif de réduction (22) de l'interférence entre le signal de rétrodiffusion ambiante et un signal ambiant incident sur le récepteur, le dispositif de réduction (22) contrôlant la première polarisation et la deuxième polarisation, et dans lequel au moins l'une desdites première et deuxième polarisations est réglable,

   dans lequel le système (14) comporte, en outre, une source (20) propre à générer un signal ambiant selon une troisième polarisation, le dispositif de réduction (22) contrôlant également la troisième polarisation.

2. Système de communication selon la revendication 1, dans lequel la première polarisation et la deuxième polarisation présentent un premier angle entre elles, le dispositif de réduction (22) contrôlant le premier angle pour que la valeur d'un critère de performance du système de communication (14) soit optimisée, le critère étant choisi dans le groupe constitué du taux d'erreur, du débit, du temps de transmission, du rapport signal à bruit et interférences, et de la qualité de service.

3. Système de communication selon la revendication 1 ou 2, dans lequel le dispositif de réduction (22) comprend un premier organe de contrôle (33) de la première polarisation et un deuxième organe de contrôle (34) de la deuxième polarisation.

4. Système de communication selon la revendication 3, dans lequel l'émetteur (16) est réalisé en un matériau reconfigurable en polarisation, le premier organe de contrôle (33) étant un organe de reconfiguration du matériau.

5. Système de communication selon la revendication 1, dans lequel la troisième polarisation et la deuxième polarisation présentent un deuxième angle entre elles, le dispositif de réduction (22) contrôlant le deuxième angle pour que la valeur d'un critère de performance du système de communication (14) soit optimisée, le critère étant choisi dans le groupe constitué du taux d'erreur, du débit, du temps de transmission, du rapport signal à bruit et interférences, et de la qualité de service.

6. Appareil (10) comportant un système (14) selon l'une quelconque des revendications 1 à 5.

7. Procédé d'optimisation de la communication par rétrodiffusion ambiante dans un système de communication par rétrodiffusion ambiante (14) comportant :

   - un émetteur (16) de rétrodiffusion ambiante propre à générer un signal de rétrodiffusion ambiante selon une première polarisation à partir d'un signal ambiant incident sur l'émetteur (16),
   - un récepteur (18) de rétrodiffusion ambiante propre à détecter selon une deuxième polarisation le signal de rétrodiffusion ambiante émis par l'émetteur de rétrodiffusion ambiante, et
   - un dispositif de réduction (22) de l'interférence entre le signal de rétrodiffusion ambiante et un signal ambiant incident sur le récepteur (18), le dispositif de réduction contrôlant la première polarisation et la deuxième polarisation, au moins l'une desdites première et deuxième polarisations étant réglable, le procédé comportant au moins une étape de :

      - variation de la première polarisation et la deuxième polarisation pour que la valeur d'un critère de performance du système de communication soit optimisée, le critère étant choisi dans le groupe constitué du taux d'erreur, du débit, du temps de transmission, du rapport signal à bruit et interférences, et de la qualité de service,

et dans lequel le système (14) comporte, en outre, une source (20) propre à générer un signal ambiant selon une troisième polarisation, le dispositif de réduction (22) contrôlant également la troisième polarisation

8. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour commander le dispositif de réduction (22) du système selon l'une quelconque des revendications 1 à 5 de manière à mettre en œuvre l'étape de variation du procédé de la revendication 7 lorsque le programme d'ordinateur est mis en œuvre sur l'unité de traitement des données.

**Patentansprüche**

1. System zum Kommunizieren durch Umgebungsrückstreuung (14), wobei das Kommunikationssystem (14) vorweist:

   - einen Umgebungsrückstreuungssender (16), der geeignet ist, ein Umgebungsrückstreuungssignal gemäß einer ersten Polarisation anhand eines Umgebungssignals, das auf den Sender (16) einfällt, zu generieren,
   - einen Umgebungsrückstreuungsempfänger (18), der geeignet ist, gemäß einer zweiten Polarisation das Umgebungsrückstreuungssignal, das durch den Umgebungsrückstreuungssender gesendet wird, zu erfassen und
   - eine Vorrichtung (22) zum Reduzieren der Interferenz zwischen dem Umgebungsrückstreuungssignal und einem Umgebungssignal, das auf den Empfänger einfällt, wobei die Reduktionsvorrichtung (22) die erste Polarisation und die zweite Polarisation steuert und wobei mindestens eine der ersten und der zweiten Polarisation einstellbar ist,

   wobei das System (14) ferner eine Quelle (20) vorweist, die geeignet ist, ein Umgebungssignal gemäß einer dritten Polarisation zu generieren, wobei die Reduktionsvorrichtung (22) auch die dritte Polarisation steuert.

2. Kommunikationssystem nach Anspruch 1, wobei die erste Polarisation und die zweite Polarisation einen ersten Winkel zwischen ihnen aufweisen, die Reduktionsvorrichtung (22) den ersten Winkel steuert, sodass der Wert eines Leistungskriteriums des Kommunikationssystems (14) optimiert wird, wobei das Kriterium aus der Gruppe ausgewählt wird, bestehend aus Fehlerrate, Durchsatz, Übertragungszeit, Signal-Rausch- und Interferenzverhältnis und Dienstqualität.

3. Kommunikationssystem nach Anspruch 1 oder 2, wobei die Reduktionsvorrichtung (22) ein erstes Element (33) zum Steuern der ersten Polarisation und ein zweites Element (34) zum Steuern der zweiten Polarisation umfasst.

4. Kommunikationssystem nach Anspruch 3, wobei der Sender (16) aus einem polarisationsrekonfigurierbaren Material gefertigt ist und das erste Steuerelement (33) ein Materialrekonfigurationselement ist.

5. Kommunikationssystem nach Anspruch 1, wobei die dritte Polarisation und die zweite Polarisation einen zweiten Winkel zwischen ihnen aufweisen, die Reduktionsvorrichtung (22) den zweiten Winkel steuert, sodass der Wert eines Leistungskriteriums des Kommunikationssystems (14) optimiert wird, wobei das Kriterium aus der Gruppe ausgewählt wird, bestehend aus Fehlerrate, Durchsatz, Übertragungszeit, Signal-Rausch- und Interferenzverhältnis und Dienstqualität.

6. Einrichtung (10), die ein System (14) nach einem der Ansprüche 1 oder 5 vorweist.

7. Verfahren zum Optimieren der Kommunikation durch Umgebungsrückstreuung in einem System zum Kommunizieren durch Umgebungsrückstreuung (14), das vorweist:

   - einen Umgebungsrückstreuungssender (16), der geeignet ist, ein Umgebungsrückstreuungssignal gemäß einer ersten Polarisation anhand eines Umgebungssignals, das auf den Sender (16) einfällt, zu generieren,
   - einen Umgebungsrückstreuungsempfänger (18), der geeignet ist, gemäß einer zweiten Polarisation das Umgebungsrückstreuungssignal, das durch den Umgebungsrückstreuungssender gesendet wird, zu erfassen und
   - eine Vorrichtung (22) zum Reduzieren der Interferenz zwischen dem Umgebungsrückstreuungssignal und einem Umgebungssignal, das auf den Empfänger (18) einfällt, wobei die Reduktionsvorrichtung die erste Polarisation und die zweite Polarisation steuert, mindestens eine der ersten und der zweiten Polarisation einstellbar ist, wobei das Verfahren mindestens einen Schritt vorweist:
- Variieren der ersten Polarisation und der zweiten Polarisation, sodass der Wert eines Leistungskriteriums des Kommunikationssystems optimiert wird, wobei das Kriterium aus der Gruppe ausgewählt wird, bestehend aus Fehlerrate, Durchsatz, Übertragungszeit, Signal-Rausch- und Interferenzverhältnis und Dienstqualität,

und wobei das System (14) ferner eine Quelle (20) vorweist, die geeignet ist, ein Umgebungssignal gemäß einer dritten Polarisation zu generieren, wobei die Reduktionsvorrichtung (22) auch die dritte Polarisation steuert.

8. Computerprogrammprodukt, das ein lesbares Informationsmedium vorweist, auf dem ein Computerprogramm, umfassend Programmanweisungen, gespeichert ist, wobei das Computerprogramm auf eine Datenverarbeitungseinheit ladbar ist und angepasst ist zum Bewirken, dass die Reduktionsvorrichtung (22) des Systems nach einem der Ansprüche 1 bis 5 den Variationsschritt des Verfahrens nach Anspruch 7 durchführt, wenn das Computerprogramm auf der Datenverarbeitungseinheit durchgeführt wird.

## Claims

1. Ambient backscattering communication system (14), the communication system (14) comprising:

   - an ambient backscattering transmitter (16) suitable for generating an ambient backscattering signal according to a first polarization from an ambient signal incident on the transmitter (16),
   - an ambient backscattering receiver (18) suitable for detecting the ambient backscattering signal transmitted by the ambient backscattering transmitter according to a second polarization, and
   - a reduction device (22) for reducing the interference between the ambient backscattering signal and an ambient signal incident on the receiver, the reduction device (22) controlling the first polarization and the second polarization,
   and wherein at least one of said first and second polarizations is adjustable,
   and wherein the system (14) further comprises a source (20) capable of generating an ambient signal according to a third polarization, the reduction device (22) also controlling the third polarization.

2. Communication system according to claim 1, wherein the first polarization and the second polarization have a first angle between them, the reduction device (22) controlling the first angle so that the value of a performance criterion of the communication system (14) is optimized, the criterion being selected from the group consisting of error rate, throughput, transmission time, signal-to-noise and interference ratio, and quality of service.

3. Communication system according to claim 1 or 2, wherein the reduction device (22) comprises a first control device (33) for the first polarization and a second control device (34) for the second polarization.

4. Communication system according to claim 3, wherein the transmitter (16) is made of a material that can be reconfigured by polarization, the first control device (33) being a material reconfiguration member.

5. Communication system according to claim 1, wherein the third polarization and the second polarization have a second angle between them, the reduction device (22) controlling the second angle so that the value of a performance criterion of the communication system (14) is optimized, the criterion being selected from the group consisting of error rate, throughput, transmission time, signal-to-noise and interference ratio, and quality of service.

6. Apparatus (10) comprising a system (14) according to any of claims 1 to 5.

7. Method for optimizing ambient backscattering communication in an ambient backscattering communication system (14) comprising:

   - an ambient backscattering transmitter (16) suitable for generating an ambient backscattering signal according to a first polarization from an ambient signal incident on the transmitter (16),
   - an ambient backscattering receiver (18) suitable for detecting the ambient backscattering signal transmitted by the ambient backscattering transmitter according to a second polarization, and
   - a reduction device (22) for reducing the interference between the ambient backscattering signal and an ambient signal incident on the receiver (18), the reduction device controlling the first polarization and the second polarization

at least one of said first and second polarizations being adjustable,
the method comprising at least one step of:

- varying the first polarization and the second polarization so that the value of a performance criterion of the communication system is less than or equal to a threshold, the criterion being selected from the group consisting of error rate, throughput, transmission time, signal-to-noise ratio and interference, and quality of service,

And wherein the system (14) further comprises a source (20) capable of generating an ambient signal according to a third polarization, the reduction device (22) also controlling the third polarization.

8. Computer program product comprising a readable information medium on which a computer program is stored, comprising program instructions, the computer program being loadable onto a data processing unit and adapted to control the reduction device (22) of the system according to any one of the claims 1 to 5 in order to implement the variation step of the method of the claim 7 when the computer program is implemented on the data processing unit.

FIG.1

## FIG.2

**RÉFÉRENCES CITÉES DANS LA DESCRIPTION**

**Documents brevets cités dans la description**

- US 20150108210 A

**Littérature non-brevet citée dans la description**

- **VAN HUYNH et al.** Ambient Backscatter Communications : A Contemporary Survey. *IEEE COMMUNICATIONS SURVEYS & TUTORIALS*, 19 November 2018, vol. 20 (4)

- **M. DUPRÉ et al.** Wave-Field Shaping in Cavities: Waves Trapped in a Box with Controllable Boundaries. *Physical Review Letters*, 2015, vol. 115, 017701